# EUROPEAN PATENT SPECIFICATION

(11) **EP 2 911 521 B1**
(45) Date of publication and mention of the grant of the patent: **04.10.2017**
(21) Application number: 13783340.6
(22) Date of filing: 25.10.2013
(51) Int. Cl.: A23C 9/154, A23C 19/05, C08B 37/00, C08L 5/04, A23L 29/256, A23P 20/10

(54) **ALGINATE GUM**
ALGINATGUMMI
GOMME D'ALGINATE

(30) Priority: 26.10.2012 EP 12190189; 26.10.2012 US 201261718939 P
(43) Date of publication of application: 02.09.2015
(73) Proprietor: DuPont Nutrition Biosciences ApS, 1411 Copenhagen K (DK)
(72) Inventor: LIOT, Frédéric, DK-8220 Brabrand (DK); STENBÆK, Dorthe, DK-8220 Brabrand (DK)
(74) Representative: DuPont EMEA
(86) International application number: PCT/EP2013/072387
(87) International publication number: WO 2014/064248

(56) References cited:
- EP-A1- 1 386 540
- WO-A1-02/23999
- WO-A1-2004/098318
- WO-A2-2004/105498
- US-A- 2 808 337
- HAVIGHORST C V: "Continuous processing for quality alginate gum", CHILTON'S FOOD ENGINEERING INTERNATIONAL,, vol. 2, no. 11, 1 November 1977 (1977-11-01), pages 46-48, XP009169739, ISSN: 0148-4478
- FMC BioPolymer: "Food Products using the Alginate/ Calcium Reaction", , 18 August 2008 (2008-08-18), pages 1-23, XP002697531, Retrieved from the Internet: URL:http://www.fmcbiopolymer.com/Portals/I SP/Content/Docs/Calcium_Alginate%20Reactio n.pdf [retrieved on 2013-05-23]
- CATARINA P REIS ET AL: "Review and current status of emulsion/dispersion technology using an internal gelation process for the design of alginate particles", JOURNAL OF MICROENCAPSULATION, TAYLOR AND FRANCIS, BASINGSTOKE, GB, vol. 23, no. 3, 1 May 2006 (2006-05-01), pages 245-257, XP002631972, ISSN: 0265-2048, DOI: 10.1080/02652040500286086

## Description

### FIELD OF THE INVENTION

The present invention relates to an alginate gum, a method for formation of an alginate gum, optionally in particulate form, and methods of use and the use thereof for example in cheese production.

### BACKGROUND OF THE INVENTION

Improvement of yield and texture of the final cheese especially in low fat or reduced fat cheese is very desirable especially in industrial cheese fabrication processes. However, when gum containing additives has been tested in industrial fabrication of fermented cheese, soluble gums, however, results in problems, such as lumps during dispersion in milk, phase separation, or inhibition of rennet activity. Also, a significant part of the gum is drained down with the whey, which inhibits whey's ability to be further processed by concentration and drying.

There exists several ways of producing cheese from milk, however, most of them have the following features in common, as described by Kosikowski F.V. & Mistry V.V. : Cheese and fermented milk foods Volume 1 : origin and principles, 1997, p.110:

| **Step** | **Primary purposes** |
|---|---|
| Setting milk | Prepare milk for acid and / or rennet curd formation and the incorporation of suitable micro-organism cultures |
| Cutting or breaking curd | Speed whey expulsion and assist in uniform cook-through of the curd by increasing the surface area |
| Cooking curds | Contract curds for more effective removal of whey, develop texture and establish moisture control |
| Draining or dipping | Permanently separate the whey from the curd |
| Curd knitting | Transform curd into characteristic texture of cheese desired, give time for acid development and aid in moisture control |
| Salting | Influence flavour, moisture and texture |
| Pressing | Shape the cheese and close up the body |

In summary, the basic principle of cheese fabrication from milk consists in separating an insoluble curd with a high dry matter content (typically above 48% according to Codex standards) containing most of the proteins and fat, from a soluble phase with a low dry matter content (typically 6-7%). This soluble phase, called whey, still contains valuable ingredients, especially soluble proteins. The commercialisation of the whey fraction is an essential component of the global profitability of a cheese production. Therefore the modern industry has developed techniques for either concentrating and drying the whey as a whole, or fractionating its components and drying them separately.

Drying whey as a whole is typically performed in 2 steps: first the whey is concentrated to 60 - 65% dry matter in a vacuum evaporator, then it is spray-dried.

Fractionation of whey components can be performed by heat-coagulation or chromatography, but the most widespread current technology is by far cross-flow membrane filtration, which separates the components of whey on basis of their molecular size. Membrane filtration technology is divided in different categories such as micro-filtration, ultra-filtration, nano-filtration and reverse osmosis, depending on the size of the molecules retained and concentrated by the membrane (retentate) or passing through it (permeate). Among these categories, ultra-filtration is the most used for whey treatment, as it allows separating macromolecules like whey proteins, from minor components like lactose and minerals. There is abundant scientific and technical literature describing membrane ultra-filtration of whey, and the parameters controlling its efficiency. Especially, it is known for the skilled person that viscosity of the retentate phase has a direct impact on permeation flow through the membrane, and resulting output. Therefore it is essential for efficient processing of whey to avoid any step that would increase its viscosity during cheese fabrication.

The potential interest of incorporating gums in the production of cheese, as described in the prior art, is for improving either palatability or output. The use of many different gum types, like carrageenans, guar, locust bean gum, alginates, pectins, xanthan or other know gums, has been described.

WO0223999 describes the addition of a very wide range of gums for example kappa carrageenan, iota carrageenan, lambda carrageenan, locust bean gum, alginate, xanthan, cellulose gum, guar, and any other suitable hydrocolloid for improving yield as well as specific texture criteria of soft, semi-hard, hard and extra-hard cheese.

WO9501729 describes the use of microparticles of microcrystalline cellulose and a galactomannan gum and at least one gelling polysaccharide for improving the organoleptic characteristics of cheese. As an example of a gelling polysaccharide mention is made of an alginate.

WO9119424 relates to a method for the preparation of microparticulate beads of a gel material and describes forming an emulsion, usually a water-in-oil emulsion, from a gellable composition and an immiscible liquid, activating gelation of the composition and thereby forming generally round, microparticulate gel beads.

WO1992006598 relates to use of a microgel, a hydrocolloid or a polysaccharide/protein particle as an additive in non-fat natural cheese.

US patent 5,532,018 relates to the use of fat mimetics, which are added to skimmed milk for forming a low fat cheese curd.

US 2808337 discloses an alginate composition for making mil puddings, and associated processes.

WO2004/098318 discloses alginate matrix particles encapsulating actives such as flavours or fragrances.

WO2004/105498 discloses milk-based products containing coated alginates.

EP 1386540 discloses wheyless cream cheese containing an ionic gum.

WO02/23999 discloses a process for making cheese-containing gum.

Havighorst, "Continuous processing for quality alginate gum" Food Engineering Intl. Nov. 1977, p.46-48 discloses background information about production of alginate from kelp.

Present known methods for incorporating gums into milk for cheese fabrication require specific equipment and operations for dispersing or preparing the gum prior to its addition to milk, which are not, in practice, in an ordinary cheese plant. In particular, sodium alginate, when added to milk as a powder or water solution, reacts with the ionic calcium of the milk and forms visible lumps of gel, which remain in the cheese curd afterwards and make it unfit for the production of cheese.

Additionally, document US 2 808 337 dicloses an alginate composition which is used in particular for the provision in milk puddings. This document disclosures wet fibrous acid containing not more than about 50% solids, preferably 15 to 25% solids (col. 1, lines 46-48). In the claimed method, an amount of water-miscible alcohol is added (col. 1, lines 48-51), plus sodium carbonate and calcium salt. The composition is dried and finely comminuted (col. 1, line 58). The extent of drying is not disclosed and the amount of calcium salt is at least 4% by weight of alginic acid (claim 1). So, the starting material in this disclosure is clearly much "wetter" than the particles of the present invention. This document discloses alginate having relatively low (50%) dry solids content, and a minimum (at least 4%) calcium ion content (with respect to alginic acid). So, it teaches away from the present invention, certainly in terms of the calcium content and particle form and size.

WO 2004/105498 disclosures coated alginates to be used in milk products and methods to produce alginates from algenic acid. This document does not contain a direct and unambiguous teaching of the three-step process of the present invention, using the given starting materials in the given order.

There is no teaching in the prior art that alginate gum particles having high dry solids content and low calcium ion content will exhibit a technical effect of lower solubility.

There still exists a need for an additive gum, such as alginate, to be added during the preparation of cheese which does not form lumps during dispersion in milk, and which does not promote phase separation or inhibition of rennet activity.

There is furthermore a need for a ready-to-use powder that can be added directly into the milk vat without specific mixing equipment and which does not increase the viscosity of the whey.

There is furthermore, a need for an additive gum, such as alginate, which can be stored for extended periods of time in a readily usable form.

### OBJECT OF THE INVENTION

It is an object of embodiments of the invention to provide an additive gum which may be added during the preparation of cheese and which does not form lumps during dispersion in milk, phase separation or inhibition of rennet activity, and use thereof. It is a further object of embodiments of the invention to provide a ready-to-use powder that can be added directly into the milk vat without specific mixing equipment and which does not increase the viscosity of the whey, and the use thereof. It is a further object of embodiments of the invention to provide an alginate gum which can be stored for extended periods of time. It is a further object of embodiments of the invention to provide a method for formation of alginate gum in dry form. It is a further object of embodiments of the invention to provide a method for manufacturing cheese from milk. It is a further object of embodiments of the invention to provide a method for producing a cheese making curd.

### SUMMARY OF THE INVENTION

So, in a first aspect the present invention relates to alginate gum particle or particles, which particle or particles - in uncoated form - have a dry solids content between 80% and 100 w/w %; and which particle or particles - in uncoated form - comprise between 0.4% and 1.6% w/w calcium ions on a dry solids basis and have a particle size of between 20 microns and 200 microns in uncoated form.

A further aspect described herein, provides a method for formation of alginate gum in dry form, said method comprising the steps of:
a. mixing alginic acid with a calcium salt to obtain a mixture;
b. adjusting the pH of the obtained mixture to a pH of between 5.0 and 8.0;
c. drying the mixture to provide alginate gum in dry form.

In a further aspect described herein, is use of alginate gum to produce cheese.

### LEGENDS TO THE FIGURES

Fig. 1 shows the dynamic viscosity of whey ultra-filtration retentate in an increasing speed gradient phase.
Fig. 2 shows the dynamic viscosity of whey ultra-filtration retentate in a decreasing speed gradient phase.

### DEFINITIONS

In the present context *"substantially insoluble"* means *"substantially insoluble in milk".* Thus, when dispersed in milk, or in water with a concentration of dissolved calcium similar to milk, i.e. about 0.4 to 0.5 g ionic calcium per litre (Robert Jeness & Stuart Patton : Principles of dairy chemistry, p169 - 175, Robert E. Kriger Publishing Company, 1976) more than 70%, preferably more than 90%, more preferably more than 95% of the mass of the product remains in an insoluble form and can be recovered by filtration or centrifugation from the liquid phase.

In the present context "dry solids content" means the solid mass fraction of the product, expressed typically in %, which is left after an exposure of 2 to 12 hours at 105 degrees Celsius in a dry oven.

In the present context "dry solids basis" means the part of a component as a fraction of the dry solids contents.

In the present context "in dry form" means having dry solids content above 80% w/w.

In the present context, "the majority of" means at least 50%, such as at least 75%, preferably at least 80%, more preferably at least 90%. As concerns the majority of the alginate gum remaining in the curd, alginate gum which does not remain in the curd is isolated and weighed (i.e. the "majority" is by mass).

In the present context "particle size" means Volume Mean Diameter (D[4,3]), such as described by Rawle, A. : "Basic principles of particle size analysis" in Surface Coating International 2003, vol.86, n°2, pp. 58-65. Measurement of particle size in the work leading to this patent has been performed by laser diffraction (also known as Low Angle Laser Light Scattering, or LALLS) using a particle size analyser model Mastersizer S from company Malvern Ltd, UK.

### DETAILED DISCLOSURE OF THE INVENTION

The present inventors have surprisingly found that it is possible to make a ready-to-use alginate gum powder that can be added directly into milk vat without specific mixing equipment, and which can disperse without causing lumps, and which can swell and absorb water while remaining as individual insoluble particles. During cheese ripening the trapped alginate gum particles bind water and contribute to maintaining a firm consistency in spite of increased moisture content.

The alginate gum particles of the invention comprise at least 50% w/w alginate, preferably at least 75% w/w alginate, more preferably at least 80% w/w alginate, most preferably at least 90% w/w alginate. The balance is preferably water. The alginate gum particles of the invention comprise a dry solids content between 80% and 100% w/w of sodium alginate, and between 0.4% and 1.6% w/w calcium ions on a dry solids basis.

In one aspect, the alginate gum as described and used herein is substantially insoluble in milk. The alginate gum in this aspect does not provoke protein depletion and resulting phase separation in milk. Furthermore, as the alginate gum in this aspect is substantially insoluble in milk there is no increase of viscosity of the whey after cutting of the curd, and whey draining is not affected as is seen with known soluble hydrocolloids.

Industrial production of cheese from fresh milk cannot be dissociated from treating the co-produced whey, both for economical and environmental reasons, and the impact on the whey from additives used during cheese making is thus of importance.

It has furthermore been found by the present inventors that the alginate gum powder as disclosed herein may be stored a ambient temperature for periods of over 6 months, in a form where it is ready for immediate incorporation into for example milk, and without altering the reprocessing of whey co-produced during cheese fabrication.

It is an important aspect of the invention that the alginate gum powder can be incorporated into cheese milk directly from this dry powder stable form, while in general it is required to first prepare gel particles which have a limited shelf life of a few days at the most.

Once dispersed in milk, the particles of the alginate powder as disclosed herein may swell and absorb humidity from the milk, without becoming soluble. Particles of the alginate gum powder as disclosed herein remain for their majority in the curd formed after coagulation during draining, and contribute to increase palatability or yield. Furthermore, even if part of the particles are washed down with whey, they remain substantially insoluble, also during the different heating steps of whey processing. The fraction of alginate which is drained in the whey remains in insoluble form. It can optionally be removed from the whey by filtration, centrifugation or other appropriate methods, or be left in the whey. Particles left in the whey do not contribute to increase its viscosity during following treatments of concentration, separation or drying of its components.

The present invention thus relates to alginate gum particle or particles, which particle or particles - in uncoated form - have a dry solids content between 80% and 100 w/w %; and which particle or particles - in uncoated form - comprise between 0.4% and 1.6% w/w calcium ions on a dry solids basis. The alginate gum particle or particles according to the invention, have a particle size of between 20 microns and 200 microns in uncoated form. The alginate gum particle or particles may additionally comprise a coating material. Suitably, the alginate gum particle or particles are substantially insoluble in milk. The alginate gum may be obtained from alginic acid extracted from brown seaweed. Alginic acid forms a gum upon binding with water.

The present invention also relates to a process for preparing an alginate powder, and the use of this alginate powder in cheese production.

In one aspect, substantially milk-insoluble alginate gum particles are provided herein. The insolubility of the particles is measured as follows (Process A): the alginate product of the invention is first dispersed in ethanol, in the ratio of 0.2 gram of dry matter of alginate for 2.0 ml ethanol, with the purpose of avoiding later formation of lumps during dispersion in water. Then this slurry is dispersed in 100 ml of water in which dissolved calcium content has been adjusted to 0.4 gram / litre by addition of calcium chloride, for the purpose of reproducing content of ionic calcium in milk. After 30 seconds of agitation, the suspension of alginate is filtered on a desiccated paper filter (Watman 2, Cat. N° 1002110) which is then dried at 105°C for 4 hours. The insolubility is expressed as the ratio between the alginate dry matter recovered at the surface of the paper filter to the initial dry matter used. The alginate gum particles have a dry solids content between 80% and 100 w/w %; and a particle size of between 20 microns and 200 microns. The present inventors have found that too big particles will sediment too fast when dispersed in milk and form a layer at the bottom of the curd during rennet coagulation. Too small particles will not remain in the curd during draining, and will be washed in the whey. In a further aspect, the particles comprise between 0.4% and 1.6 w/w % calcium ions on a dry solids basis. These substantially insoluble alginate gum particles may furthermore be coated with a coating material of one or more coating materials selected from the group of sugars, lecithin, mono-, di- and tri-glycerides of fatty acids, calcium chloride, polysorbate, calcium lactate, and alcohol. In one aspect, the ratio of alginate gum to coating material is between 10:90 and 90:10 on a dry solids basis, such as wherein the ratio of alginate gum to coating material is between 30:60 to 60:30 on dry solids basis for example as measured as described herein. The particles may also be agglomerated.

In one aspect, the alginate gum particles having instant dispersing and swelling properties may be incorporated to milk for the fabrication of cheese, with the purpose of improving its palatability and / or yield, while avoiding disturbance during reprocessing of the co-produced whey. The milk used can either be whole milk, or be partially or totally skimmed for fat. In one aspect, the milk is whole milk. The alginate powder ingredient is preferably, but not restrictively incorporated prior to pasteurisation of the milk. Alternatively it can be incorporated to the pasteurised milk before addition of acidifying culture, or in the period between addition of culture and addition of rennet or other milk-clotting agent.

The invention may be used for a wide variety of cheeses, like soft cheese, yellow semi-hard or hard cheese, Mozzarella, white brined cheese or other types of cheese, such as where the cheese belongs, but not restrictively, to the group composed of yellow hard cheese, yellow semi-hard cheese, soft cheese, cheddar, white cheese, mozzarella cheese and blue-veined cheese.

In one aspect, the alginate gum has the ability to disperse easily in milk and swell immediately by absorption of water, while remaining as individual non-soluble particles.

In a further aspect provided herein, is a method for formation of alginate gum in dry form, said method comprising the steps of: a) mixing alginic acid with a calcium salt to obtain a mixture; b) adjusting the pH of the obtained mixture to a pH of between 5.0 and 8.0; and drying the mixture to provide alginate gum in dry form. The alginate gum may be obtained from alginic acid extracted from brown seaweed. The alginic acid is then mixed with a calcium salt. In one aspect, the calcium salt is calcium chloride (CaCl₂). In step a), the calcium salt such as CaCl₂ is mixed well with the alginic acid in order to ensure an evenly and homogeneous distribution. The content of calcium ions after mixing in step a) is preferably between 0.4% and 1.6 w/w % calcium ions on a dry solids basis, such as between 0.7% and 1.4 w/w % calcium ions on a dry solids basis. The calcium content may be measured by Inductively Coupled Plasma Optical Emission Spectrometry (ICP-OES).

In one aspect, the pH of the mixture in step b) is adjusted to a pH of between 5.0 and 8.0, preferably to a pH of between 5.5 and 8.0. In a further aspect, the adjustment takes place by addition of a metal carbonate salt, such as sodium carbonate (Na₂CO₃.) or potassium carbonate (K₂CO₃).

The alginate gum may then be dried in a suitable drying apparatus, such as for example in a hot air oven, and suitably ground to powder for example in a mill. The size of the particles of the powder is comprised between 10 microns and 200 microns, such between 20 microns and 200 microns. In one aspect, the dry solids content is between 80% and 100% w/w. In a further aspect, the dry solids content is between 85% and 95% w/w. In one aspect, the drying in step c) is performed at a temperature of between 95°C to 120°C, suitably between 100 and 110°C.

In a further aspect, the alginate gum is encapsulated in a coating material with the purpose of improving its dispersibility in for example cold milk. The encapsulation method is chosen among those known to the man of the art for encapsulating powders. The coating material is prepared from one or several ingredients known for their hydrophilic properties, like non-restrictively sugars, lecithin, mono-, di- and tri-glycerides of fatty acids, polysorbate, calcium chloride, calcium lactate, alcohol or other appropriate ingredients. In one aspect, the coating material is prepared from one or several ingredients such as a combination of mono-, di- and tri-glycerides with polysorbate and calcium chloride.

Depending on the type of coating equipment used and expected dispersing properties, the mass ratio between the alginate powder ingredient and the coating agent may vary between 10:90 and 90:10 on dry solids basis such as between 30:60 to 60:30 on dry solids basis, and one preferred ratio is 40% by mass of alginate powder ingredient to 60% by mass of coating agent.

A typical method for preparing a cheese such as semi-hard yellow cheese is illustrated in the example section.

The dosing of the alginate powder ingredient into milk is preferably between 0.01% and 0.4%, such as for example between 0.02% and 0.3% or 0.01% and 0.2% by mass of the milk used, and not comprising the optional amount of coating agent used for encapsulating the powder. More preferably, a dosing of alginate powder ingredient is comprised between 0.01% and 0.05% uncoated alginate powder ingredient of milk mass is recommended.

There are several options for addition of the alginate powder ingredient to milk, either before or after pasteurisation. However, for hygienic reasons, it is found best to incorporate it before pasteurisation of the milk. After dispersion of the alginate powder at the surface of the milk vat, the milk is pasteurised to typically 74°C for 1 minute, either in the vat or in a tubular or plate heat exchanger, and then cooled to fermentation temperature of 33°C under permanent slow agitation. An appropriate acidifying and ripening cheese culture is added to the milk. After a maturation time of 45 minutes, animal rennet is dispersed into the milk, which is then left completely still during clotting. Under clotting, the milk forms a coagulum over a period of 15 to 30 minutes. The coagulum is cut into cubes of 1 cm side, and agitation is applied to the vat. During agitation, whey is expelled from the coagulum. Part of the whey is removed from the vat and replaced by water for improving lactose removal. Then the coagulum is drained from remaining whey and formed into moulds, and is pressed to form a block. Once the pH of the curd block has reached a value of 5.3, it is salted by addition of dry salt or immersion in salt brine, to a typical salt content of 1.5 - 2.0% by mass. The salted cheese block is then stored for ripening until it is ready for consumption. As is illustrated in the examples, the method can be used for making either full fat or low fat cheese, with beneficial impact on palatability and/or yield.

The whey which has been produced during draining of the curd is either filtered or centrifuged for removal of particles of curd and fat, optionally pasteurised to typically 80°C, and cooled to 4°C. Different options exist for processing the whey, like the ones described previously, which all consist in concentrating and drying the whey, optionally after a fractionation of its components or combination with other ingredients. As is illustrated in the examples, the ability to fractionation and concentration of the whey remains unchanged when using the alginate gum as disclosed herein.

In one aspect, the alginate gum in powder form disclosed herein contains between 0.4% and 1.6 w/w % calcium ions such as between 0.7% and 1.4 w/w % calcium ions on a dry solids basis. Optionally, the alginate gum is encapsulated in a water-soluble coating for helping its dispersion in milk. When this alginate is dispersed in milk for example used for cheese preparation with the purpose of improving its palatability or yield, the powder particles disperse easily, and swell without getting into solution. As a result, they remain in suspension and get trapped in the curd during cheese making. Only a minor proportion of particles is drained in the whey, and does not modify noticeably its viscosity. The whey resulting from cheese fabrication can afterward be processed normally, without loss of output or quality in final products. During cheese ripening, the trapped alginate particles bind water and contribute to maintaining a firm consistency in spite of increased moisture content.

In one aspect, provided herein is use of a substantially insoluble, particulate alginate gum to produce cheese.

### FURTHER EMBODIMENTS ACCORDING TO THE INVENTION

Embodiment 1. Alginate gum particle or particles, which particle or particles - in uncoated form - have a dry solids content between 80% and 100 w/w %; and which particles - in uncoated form - comprise between 0.4% and 1.6% w/w calcium ions on a dry solids basis and have a particle size of between 20 microns and 200 microns in uncoated form.

Embodiment 2. Alginate gum particles according to embodiment 1, comprising at least 50% w/w alginate, preferably at least 75% w/w alginate, more preferably at least 80% w/w alginate, most preferably at least 90% w/w alginate.

Embodiment 3. Alginate gum particle or particles according to any one of embodiments 1-2, additionally comprising a coating material.

Embodiment 4. Alginate gum particle or particles according to any one of the preceding embodiments, being substantially insoluble in milk.

Embodiment 5. Alginate gum particle or particles according to any one of embodiments 1-4, comprising a dry solids content between 80% and 100% w/w of sodium alginate, and between 0.4% and 1.6% w/w calcium ions on a dry solids basis.

Embodiment 6. A method for formation of alginate gum in dry form, said method comprising the steps of:
a. mixing alginic acid with a calcium salt to obtain a mixture, wherein the content of calcium ions after mixing with a calcium salt are between 0.4% and 1.6% w/w calcium ions on a dry solids basis;
b. adjusting the pH of the obtained mixture to a pH of between 5.0 and 8.0;
c. drying the mixture to provide alginate gum in dry form, wherein the drying is performed at a temperature of between 95°C to 120°C; and
wherein the dried mixture is ground to powder of particles with a particle size of between 10 microns and 200 microns.

Embodiment 7. The method according to embodiment 6, wherein the calcium salt is calcium chloride.

Embodiment 8. The method according to any of embodiments 6-7, wherein the adjustment in step b) is to a pH of between 5.0 and 8.0.

Embodiment 9. The method according to any of embodiments 6-8, wherein the adjustment of the pH takes place by addition of a metal carbonate salt such as sodium carbonate. Embodiment 10. The method according to any of embodiments 6-9, wherein the drying in step c) is to a dry solids content between 80% and 100% w/w.

Embodiment 11. The method according to embodiment 6, wherein the alginate gum is coated with a coating material after grinding.

Embodiment 12. The method according to embodiment 6, wherein the alginate gum particles are agglomerated after grinding.

Embodiment 13. Use of particulate alginate gum as defined in any one of embodiments 1-5 to produce cheese.

Embodiment 14. The use according to embodiment 13, wherein the alginate gum is as prepared according to any one of embodiments 6-12.

### EXAMPLE 1

### Preparation of particulate alginate gum:

The alginate of the invention is based on wet alginic acid (dry matter appr. 30 %). The alginic acid is extracted from brown seaweed. 4500 g alginic acid (dry matter appr. 30 %), is mixed with 55.8 g calcium chloride, di-hydrate. When the calcium salt has been evenly distributed on the alginic acid, sodium carbonate salt is added for adjustment of the pH. 432 g sodium carbonate was used in order to reach a pH∼ 6.35.

The alginate was dried in a convection oven at 40°C for 16 hours and milled on a Bauermeister rotary grinder. The powder is sieved to a fraction < 100µm.

Particle size measurement of the particles from this Example was carried out using a particle size analyser model Mastersizer S from Malvern Ltd, UK. The following parameters were obtained:

| **D[4.3]** | **D[0.5]** |
|---|---|
| ≥ 118-142 microns | 106-130 microns |

D[4.3] is the volume mean diameter. D[0.5] is the volume median diameter. 50% of the distribution is above and 50 % is below the value of D [0.5] - it divides the distribution exactly in half.

The resulting alginate gum dough appears incoherent and very different to a standard neutralised alginate dough. The very low content of calcium ions in this alginate enhances the grinding into a very fine particle size due to a more fibrous sodium alginate structure.

The insolubility in milk of the alginate produced is then measured and compared to a standard sodium alginate (Grindsted® Alginate FD175 from Danisco A/S) according to Process A, given above. For each alginate type, two measurements of insolubility are performed in water adjusted to 0.4 gram ionic calcium per litre with calcium chloride. It is observed that 99.4% +/- 0.04% of the dry matter of the alginate object of the invention is recovered on the paper filter, while only 86.8% +/-0.025% of the dry matter of the standard sodium alginate is recovered. This means that less than 1% of the dry matter of the alginate from example 1 has been solubilised, while over 13% of the standard sodium alginate has been solubilised.

### EXAMPLE 2

Coating of alginate gum as prepared in Example 1: A slurry is prepared by mixing 985g alginate powder ingredient, as described in example 1, and 123g CaCl₂.2H₂O powder with a lipid melt (1084g Cremodan Super (Danisco) and 271g Polysorbat 80) at 75-85°C for 30min. The melt slurry is subsequently sprayed using an atomizer wheel (Ø120mm / 7000rpm) into in a NIRO NP 6.3 spray tower with cooled process air (∼500m3/h at 5-10°C). The process results in a powder comprising powder granules with alginate powder and CaCl₂.2H₂O embedded (encapsulated) in a matrix of the lipid components. The powder is free flowing at temperatures below the melting point of Cremodan Super (i.e. ∼68°C).

The slurry/the final powder is comprised by:
Alginate Intermediate of Example 1: 40 w/w%
Cremodan Super: 44 w/w%
Polysorbat 80: 11 w/w%
CaCl₂.2H₂O: 5 w/w%

### EXAMPLE 3

### Manufacture of low-fat Gouda cheese with 60% reduction of fat/dry matter compared to full-fat Gouda

A total of 20.0 kg of low fat milk is prepared by mixing 10.0 kg of half-skimmed milk and 10.0 kg of skimmed milk. The milk is divided in 2 cheese vats of 10.0 kg each. One of the vats (designed hereafter as vat A) corresponds to control test without alginate. The other vat (designed hereafter as vat B) corresponds to trial test containing the alginate sample. An amount of 5 grams of alginate sample as prepared in example 1 corresponding to 0.05% of the milk quantity, is dispersed in vat B under agitation in order to avoid formation of lumps. Then both vats are treated identically as follows: The milk in the vat is heated to 74°C for 1.0 minute, cooled down to 33°C, and inoculated with cheese culture Choozit™ Classic 111 from DANISCO A/S. The milk is matured for 60 minutes under slow agitation. Then, 3.5 ml of rennet CARLINA™ 520 mg/l are diluted in 20 ml distilled water and added to the matured milk. Agitation is applied for 1 minute after addition of the rennet, and then agitation is stopped and mixing arm removed. Clotting occurs after 12 min 40 sec for control vat A, and 13 min 16 sec for vat B with alginate. After clotting, the curd is cut in cubes of 1 cm, the mixing arm is mounted on the vat, and curd is stirred for 45 minutes. After that time, 3.5 kg of whey are removed from the vat, and replaced by 3.0 kg of water at 45°C. The content of the vat is heated to 36°C and stirring is maintained until 2 hours and 15 min after rennet addition. Then, the curd is drained and poured into cylindrical perforated cheese moulds of 11 cm diameter. The curd is pressed in the mould at 36°C, until pH reaches a value of 5.30, at 4 hours and 25 min for curd from both vat A and vat B. Then the pressed curd blocks are removed from the mould and immersed for 120 minutes in salt brine with a concentration of 300 g/l of salt. Afterwards, the curd blocks are removed from the brine, and rested in order to remove the excess of brine still present on the surface. Afterwards, the cheese is vacuum-packed in hermetic plastic sheet, and stored for ripening. Ripening temperature is first set to 12°C during 2 weeks, and then it is set to 9°C for 4 weeks before evaluation of the cheese. The cheese samples are evaluated for yield and dry matter, firmness and palatability.

### Evaluation of cheese processing and products:

Yield: The yield of control vat A, measured 2 days after fabrication, is 795 grams cheese, with a dry matter of 48.0%. The yield of test vat B containing the alginate ingredient, at 2 days after fabrication, is 808 grams of cheese, with a dry matter of 47.4%. This corresponds to a yield increase of 1.6% in cheese quantity by using the alginate ingredient, due to higher retention of humidity in similar processing conditions.

Firmness: Firmness in the cheese samples is measured 6 weeks after fabrication with a texture analyser (TA-XT PLUS from STABLE MICRO SYSTEMS Ltd), equipped with a spherical probe of 25 mm diameter. The firmness of the cheese is expressed as the force (in grams) required for penetrating the cheese surface until a depth of 10 mm. The average firmness of control cheese from vat A is 8530 g, while it is 9430 g for the cheese from test vat B containing the alginate ingredient. We conclude that in spite of higher yield and lower dry matter, the cheese containing the alginate ingredient maintains a higher firmness, which will result in better ability to be grated or sliced.

Palatability: Cheese from vat A and vat B are tasted by trained staff. It is observed that both cheese samples have a gummy consistency in mouth, as is expected for low-fat Gouda cheese. However, it is also observed that gumminess is less pronounced for cheese made from test vat B with the alginate powder.

### Example 4

### Manufacture of full-fat Gouda cheese

A total of 20.0 kg of fresh whole milk is divided in 2 cheese vats of 10.0 kg each. One of the vats (called hereafter vat A) corresponds to control test without alginate. The other vat (called hereafter vat B) corresponds to trial test containing the encapsulated alginate sample as prepared in example 2. An amount of 6.3 grams of encapsulated alginate sample, corresponding to 0.063% of the milk quantity as encapsulated product, or 0.025% as pure alginate, is dispersed at the surface of vat B. Then both vats are treated identically as follow: The milk in the vat is heated to 74°C for 1.0 minute, cooled down to 33°C, and inoculated with cheese culture Choozit™ Classic 111 from DANISCO A/S. The milk is matured for 45 minutes under slow agitation. Then, 3.5 ml of rennet CARLINA™ 520 mg/l are diluted in 20 ml distilled water and added to the matured milk. Slow agitation is maintained during 1 minute after addition of the rennet, and then stopped, and the mixing arm removed. Clotting occurs after 14 min 20 sec for control vat A, and 14 min 08 sec for vat B with alginate. After clotting, the curd is cut in cubes of 1 cm, the mixing arm is mounted on the vat, and curd is stirred for 45 minutes. After that time, 3.5 kg of whey is removed from the vat, and replaced by 3.0 kg of water at 45°C. The content of the vat is heated to 36°C and stirring is maintained until 1 hours and 30 min after rennet addition. At that moment, the curd is drained and poured into cylindrical perforated cheese moulds of 11 cm diameter. The curd is pressed in the mould at 36°C, until pH reaches a value of 5.30, at 4 hours and 50 min for curd from both vat A and vat B. Then the pressed curd blocks are removed from the moulds and immersed for 120 minutes in salt brine with a concentration of 300 g/l of salt. Afterwards, the curd blocks are removed from brine to rest, then vacuum-packed in hermetic plastic sheet, and stored for ripening. Ripening temperature is first set to 12°C during 2 weeks, and then it is lowered to 9°C for 4 more weeks before evaluation of the cheese. The cheese samples are evaluated for yield and dry matter, firmness and palatability.

### Evaluation of cheese processing and products:

Yield: the yield of control vat A, measured 2 days after fabrication, is 1114 grams cheese, with a dry matter of 51.9%. The yield of test vat B containing the alginate ingredient, at 2 days after fabrication, is 1122 grams of cheese, with a dry matter of 51.0%. This corresponds to a yield increase of 0.72% in cheese quantity by using the alginate ingredient, due to higher retention of humidity in similar processing conditions.

Firmness: Firmness in the cheese samples is measured 6 weeks after fabrication, with similar equipment and procedure as in example 3. The average firmness of control cheese from vat A is 4019 grams, while it is 4062 grams for the cheese from test vat B containing the encapsulated alginate ingredient. As for example 3, we conclude that in spite of higher yield and lower dry matter, the cheese containing the encapsulated alginate ingredient maintains a higher firmness, which will result in better ability to be grated or sliced.

Palatability: Cheese from vat A and vat B are evaluated by trained staff. No noticeable difference is found between the 2 types of cheese, neither for taste, consistency or mouth feel. Both products have typical Gouda characteristics.

### EXAMPLE 5

### Manufacture of full-fat Gouda cheese with treatment of the co-processed whey

In this Example, the whey co-produced during cheese fabrication is concentrated by cross-flow ultra-filtration, in order to evaluate the impact of the invention on this operation.

Fabrication of cheese: on each of 2 separate days, identified as day 1 and day 2, one batch of 600 kg of whole milk is divided in 2 cheese vats of 300 kg each. For each day of fabrication, one vat is processed without addition of alginate ingredient for producing a reference cheese sample, and one vat is processed after dispersion of 300 grams of encapsulated alginate for producing an experimental cheese sample according to the invention. The encapsulated alginate sample used in this example is as prepared in example 2. Its dosing corresponds to 0.1% of encapsulated alginate, or 0.04% of pure alginate, as proportion of the milk mass. For each day of fabrication, the milk from both reference and experimental vats is pasteurised to 74°C for 20 seconds, cooled down to 32°C, and anhydrous calcium chloride (CaCl₂) is added to it at a concentration of 0.035 gram / litre. Then the milk is inoculated with cheese culture Choozit™ Classic 111 from DANISCO A/S. The milk is matured for 30 minutes under slow agitation. Then, 60 ml of rennet Marzyme® 15 is added to the matured milk. Slow agitation is maintained during 1 minute after addition of the rennet, and then stopped, and the mixing arm removed. After clotting, the curd is cut in cubes of 1 cm, the mixing arm is mounted on the vat, and the curd is stirred for 10 minutes. Then 105 litres of whey are removed from the vat and replaced by 105 litres of water at 55°C. The content of the vat is heated up to 38°C, and agitation is maintained for 30 more minutes. Then the curd is filled in form and pressed during 2 hours and 15 minutes. Pressure is removed, and the curd blocks are stored until pH has decreased to 5.30. Once the pH has reached 5.30, the curd blocks are immerged in saturated salt brine at 12°C for 12 to 14 hours. Once removed from the brine, the cheese blocks are left to rest between 4 and 6 hours at 18°C and 70% relative humidity. Then they are vacuum-packed in hermetic plastic sheet, and stored at 8-9°C for ripening. The firmness of the cheese samples is measured 7 days after fabrication with a Brookfield® CT3 texture analyser, equipped with a cylindrical probe of 2 mm diameter (model TA39).

### Evaluation of cheese yield and firmness:

The yield and firmness of the cheese samples from the different trials are summarised in table 1 below:

**Table 1: cheese yield and firmness in example 5**

| Trial type : | Reference cheese day 1 | Experimental cheese day 1 | Reference cheese day 2 | Experimental cheese day 2 |
|---|---|---|---|---|
| Addition of encapsulated alginate sample to milk | No | Yes | No | Yes |
| Yield as kg cheese / kg milk (%) | 10.78 | 11.16 | 10.40 | 10.64 |
| Yield increase compared to reference cheese of same day (%) | - | 3.5 | - | 2.3 |
| Dry matter in cheese (%) | 55.63 | 53.85 | 55.66 | 54.63 |
| Firmness at 1 week (grams) | 507.2 | 507.3 | 604.9 | 636.9 |

As for examples 3 & 4, we observe that firmness in experimental cheese containing the alginate preparation is similar or higher than in reference cheese of same fabrication day, in spite of lower dry matter, which will result in better ability to be sliced or grated.

### Treatment of the whey:

The whey produced during each cheese fabrication is collected. A volume of 200 litres is concentrated by cross-flow ultra-filtration on a spiral-wound membrane at a temperature of 55°C, up to a 6-fold concentration factor.

Both initial whey and final retentate for each trial are analysed for dry matter and protein content. Also, the dynamic viscosity of each retentate is measured with a Rheomat 300 viscosimeter from proRheo GmbH, equipped with a model 1261 measuring cell. Viscosity is measured over a speed gradient from 0 to 800 s-1, both in increasing and decreasing phases, in order to simulate the speed levels encountered in pumps in industrial ultra-filtration systems.

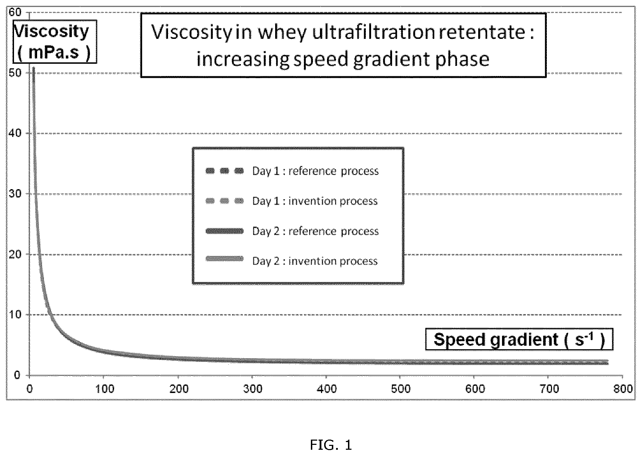

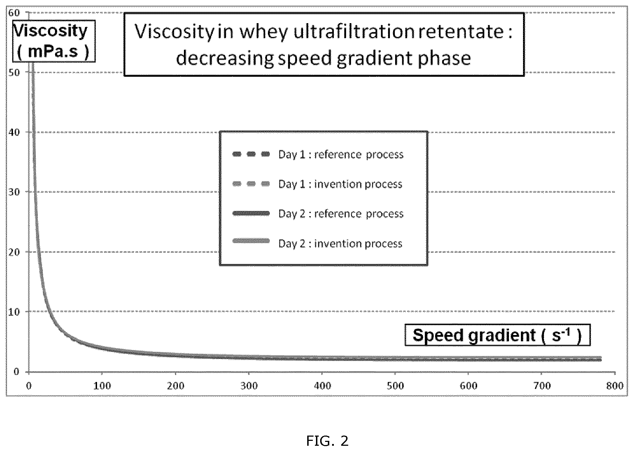

The composition of whey and retentate of each trial is given in table 2, and the dynamic viscosity is given in Fig. 1 and 2, respectively for increasing and decreasing phase.

**Table 2 : composition of whey and ultra-filtration retentate**

| Whey source | | Day 1 : reference process | Day 1 : invention process | Day 2 : reference process | Day 2 : invention process |
|---|---|---|---|---|---|
| Cheese whey | Dry matter (%) | 50.75 | 52.26 | 50.65 | 50.87 |
| | Proteins (%) | 5.35 | 5.47 | 5.41 | 5.35 |
| Ultra-filtration retentate | Dry matter (%) | 75.44 | 77.96 | 72.28 | 78.22 |
| | Proteins (%) | 25.52 | 24.41 | 20.75 | 23.67 |

The analysis of whey retentates indicates that, in similar ultra filtration conditions, a higher dry matter is achieved for the whey issued from the invention process. In spite of this higher dry matter, it is observed that dynamic viscosity is substantially identical over the whole speed gradient for all trials. It is therefore confirmed that the object of the invention does not result in any increase of whey viscosity, and that ultra-filtration of the whey is not disturbed by its use.

## Claims

1. Alginate gum particle or particles, which particle or particles in uncoated form have a dry solids content between 80% and 100% w/w; and which particle or particles in uncoated form comprise between 0.4% and 1.6% w/w calcium ions on a dry solids basis and have a particle size of between 20 microns and 200 microns in uncoated form.

2. Alginate gum particles according to claim 1, comprising at least 50% w/w alginate, preferably at least 75% w/w alginate, more preferably at least 80% w/w alginate, most preferably at least 90% w/w alginate.

3. Alginate gum particle or particles according to any one of the preceding claims, additionally comprising a coating material.

4. Alginate gum particle or particles according to any one of the preceding claims, being substantially insoluble in milk.

5. Alginate gum particle of particles according to any one of the preceding claims, comprising a dry solids content between 80% and 100% w/w of sodium alginate, and between 0.4% and 1.6% w/w calcium ions on a dry solids basis.

6. A method for formation of alginate gum in dry form, said method comprising the steps of:
a. mixing alginic acid with a calcium salt to obtain a mixture, wherein the content of calcium ions after mixing with a calcium salt are between 0.4% and 1.6% w/w calcium ions on a dry solids basis;
b. adjusting the pH of the obtained mixture to a pH of between 5.0 and 8.0;
c. drying the mixture to provide alginate gum in dry form, wherein the drying is performed at a temperature of between 95°C to 120°C; and
wherein the dried mixture is ground to powder of particles with a particle size of between 10 microns and 200 microns.

7. The method according to claim 6, wherein the calcium salt is calcium chloride.

8. The method according to any one of claims 6-7, wherein the adjustment of pH in step b) is to a pH of between 5.0 and 8.0.

9. The method according to any one of claims 6-8, wherein the adjustment of the pH takes place by addition of a metal carbonate salt such as sodium carbonate.

10. The method according to any one of claims 6-9, wherein the drying in step c) is to a dry solids content between 80% and 100% w/w.

11. The method according to claim 6, wherein the alginate gum particles are coated with a coating material after grinding.

12. The method according to claim 6, wherein the alginate gum particles are agglomerated after grinding.

13. Use of particulate alginate gum as defined in any one of claims 1-5 to produce cheese.

14. The use according to claim 13, wherein the alginate gum is as prepared according to any one of claims 6-12.

## Patentansprüche

1. Alginatgummipartikel oder -partikel, welches Partikel oder welche Partikel in unbeschichteter Form einen Trockenmassegehalt zwischen 80 % und 100 % w/w aufweist/aufweisen; und welches Partikel oder welche Partikel in unbeschichteter Form zwischen 0,4 % und 1,6 % w/w Calciumionen auf Trockenmassebasis umfasst/umfassen und eine Partikelgröße von zwischen 20 Mikrometer und 200 Mikrometer in unbeschichteter Form aufweist/aufweisen.

2. Alginatgummipartikel gemäß Anspruch 1, umfassend wenigstens 50 % w/w Alginat, vorzugsweise wenigstens 75 % w/w Alginat, bevorzugter wenigstens 80 % w/w Alginat, höchst bevorzugt wenigstens 90 % w/w Alginat.

3. Alginatgummipartikel oder -partikel gemäß einem der vorstehenden Ansprüche, zusätzlich umfassend ein Beschichtungsmaterial.

4. Alginatgummipartikel oder -partikel gemäß einem der vorstehenden Ansprüche, das/die im Wesentlichen unlöslich in Milch ist/sind.

5. Alginatgummipartikel oder -partikel gemäß einem der vorstehenden Ansprüche, umfassend einen Trockenmassegehalt zwischen 80 % und 100 % w/w Natriumalginat und zwischen 0,4 % und 1,6 % w/w Calciumionen auf Trockenmassebasis.

6. Verfahren zum Herstellen von Alginatgummi in trockener Form, wobei das Verfahren die Schritte umfasst:
a. Mischen von Alginsäure mit einem Calciumsalz, um ein Gemisch zu erhalten, wobei der Gehalt an Calcium-Ionen nach dem Mischen mit einem Calciumsalz zwischen 0,4 % und 1,6 % w/w Calcium-Ionen auf Trockenmassebasis beträgt;
b. Einstellen des pH-Werts des erhaltenen Gemischs auf einen pH-Wert von zwischen 5,0 und 8,0;
c. Trocknen des Gemischs, um Alginatgummi in trockener Form zu erhalten, wobei das Trocknen bei einer Temperatur von zwischen 95 °C und 120 °C durchgeführt wird; und
wobei das getrocknete Gemisch zu einem Partikelpulver mit einer Partikelgröße von zwischen 10 Mikrometer und 200 Mikrometer gemahlen wird.

7. Verfahren gemäß Anspruch 6, wobei das Calciumsalz Calciumchlorid ist.

8. Verfahren gemäß einem der Ansprüche 6-7, wobei das Einstellen des pH-Werts bei Schritt b) auf einen pH-Wert zwischen 5,0 und 8,0 erfolgt.

9. Verfahren gemäß einem der Ansprüche 6-8, wobei das Einstellen des pH-Werts durch Zugeben eines Metallcarbonatsalzes, wie z. B. Natriumcarbonat, erfolgt.

10. Verfahren gemäß einem der Ansprüche 6-9, wobei das Trocknen bei Schritt c) auf einen Trockenmassegehalt zwischen 80 % und 100 % w/w erfolgt.

11. Verfahren gemäß Anspruch 6, wobei die Alginatgummipartikel nach dem Mahlen mit einem Beschichtungsmaterial beschichtet werden.

12. Verfahren gemäß Anspruch 6, wobei die Alginatgummipartikel nach dem Mahlen agglomeriert werden.

13. Verwendung von partikelförmigem Alginatgummi gemäß einem der Ansprüche 1-5 zum Herstellen von Käse.

14. Verwendung gemäß Anspruch 13, wobei der Alginatgummi gemäß einem der Ansprüche 6-12 hergestellt ist.

## Revendications

1. Particule ou particules de gomme d'alginate, ladite particule ou lesdites particules, sous forme nue, ont une teneur en matières solides sèches comprise entre 80 % et 100 % m/m ; et ladite particule ou lesdites particules, sous forme nue, comprennent entre 0,4 % et 1,6 % m/m d'ions calcium sur la base des matières solides sèches et ont une taille de particule comprise entre 20 microns et 200 microns sous forme nue.

2. Particules de gomme d'alginate selon la revendication 1, comprenant au moins 50 % m/m d'alginate, de préférence au moins 75 % m/m d'alginate, plus préférablement au moins 80 % m/m d'alginate, de manière préférée entre toutes au moins 90 % m/m d'alginate.

3. Particule ou particules de gomme d'alginate selon l'une quelconque des revendications précédentes, comprenant en outre un matériau d'enrobage.

4. Particule ou particules de gomme d'alginate selon l'une quelconque des revendications précédentes, étant sensiblement insolubles dans le lait.

5. Particule ou particules de gomme d'alginate selon l'une quelconque des revendications précédentes, comprenant une teneur en matières solides sèches comprise entre 80 % et 100 % m/m d'alginate de sodium, et entre 0,4 % et 1,6 % m/m d'ions calcium sur la base des matières solides sèches.

6. Procédé de formation de gomme d'alginate sous forme sèche, ledit procédé comprenant les étapes de :
a. mélange d'acide alginique avec un sel de calcium pour obtenir un mélange, dans lequel la teneur en ions calcium après mélange avec un sel de calcium est comprise entre 0,4 % et 1,6 % m/m d'ions calcium sur la base des matières solides sèches ;
b. ajustement du pH du mélange obtenu à un pH compris entre 5,0 et 8,0 ;
c. séchage du mélange pour produire une gomme d'alginate sous forme sèche, le séchage étant effectué à une température comprise entre 95 °C et 120 °C ; et
dans lequel le mélange séché est broyé en poudre de particules ayant une taille de particule comprise entre 10 microns et 200 microns.

7. Procédé selon la revendication 6, dans lequel le sel de calcium est le chlorure de calcium.

8. Procédé selon l'une quelconque des revendications 6 à 7, dans lequel l'ajustement de pH dans l'étape b) est à un pH compris entre 5,0 et 8,0.

9. Procédé selon l'une quelconque des revendications 6 à 8, dans lequel l'ajustement du pH est effectué par ajout d'un sel de carbonate de métal tel que le carbonate de sodium.

10. Procédé selon l'une quelconque des revendications 6 à 9, dans lequel le séchage dans l'étape c) est à une teneur en matières solides sèches comprise entre 80 % et 100 % m/m.

11. Procédé selon la revendication 6, dans lequel les particules de gomme d'alginate sont enrobées avec un matériau d'enrobage après broyage.

12. Procédé selon la revendication 6, dans lequel les particules de gomme d'alginate sont agglomérées après broyage.

13. Utilisation de gomme d'alginate particulaire telle que définie dans l'une quelconque des revendications 1 à 5 pour produire du fromage.

14. Utilisation selon la revendication 13, dans laquelle la gomme d'alginate est telle que préparée selon l'une quelconque des revendications 6 à 12.
